(19) Europäisches Patentamt
European Patent Office
Office européen des brevets

(11) **EP 3 779 362 B1**

(12) **EUROPEAN PATENT SPECIFICATION**

(45) Date of publication and mention
of the grant of the patent:
**03.04.2024 Bulletin 2024/14**

(21) Application number: **19191674.1**

(22) Date of filing: **14.08.2019**

(51) International Patent Classification (IPC):
**G01C 21/34** (2006.01)

(52) Cooperative Patent Classification (CPC):
**G01C 21/3446; G01C 21/3492**

(54) **METHOD AND SYSTEM FOR TIME-DEPENDENT VEHICLE ROUTING**

VERFAHREN UND SYSTEM FÜR ZEITABHÄNGIGES FAHRZEUGROUTING

PROCÉDÉ ET SYSTÈME DE ROUTAGE DE VÉHICULE TEMPORELLEMENT DÉPENDANT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**17.02.2021 Bulletin 2021/07**

(73) Proprietors:
• **Bayerische Motoren Werke Aktiengesellschaft 80809 München (DE)**
• **Karlsruher Institut für Technologie KIT INNOVATIONS- UND RELATIONSMANAGEMENT (IRM) 76344 Eggenstein-Leopoldshafen (DE)**

(72) Inventor: **Zeitz, Tim 76137 Karlsruhe (DE)**

(56) References cited:
**US-A1- 2011 251 789    US-A1- 2012 283 948**
**US-A1- 2014 107 921    US-A1- 2014 200 807**

• **Tim Zeitz: "Algorithmen für Routenplanung", , 1 July 2019 (2019-07-01), XP055665560, Retrieved from the Internet: URL:https://i11www.iti.kit.edu/_media/teaching/sommer2019/routenplanung/chap2-timedependent-preprocessing.pdf [retrieved on 2020-02-05]**
• **VEIT BATZ G ET AL: "Minimum time-dependent travel times with contraction hierarchies", ACM JOURNAL OF EXPERIMENTAL ALGORITHMICS, ASSOCIATION OF COMPUTING MACHINERY, NEW YORK, NY, US, vol. 18, 19 April 2013 (2013-04-19), pages 1.1-1.43, XP058042504, ISSN: 1084-6654, DOI: 10.1145/2444016.2444020**
• **Julian Dibbelt ET AL: "Customizable Contraction Hierarchies" In: "12th European Conference on Computer Vision, ECCV 2012", 24 August 2015 (2015-08-24), Springer Berlin Heidelberg, Berlin, Heidelberg 031559, XP055668255, ISSN: 0302-9743 ISBN: 978-3-540-73108-5 vol. 8504, pages 271-282, DOI: 10.1007/978-3-319-07959-2_23, * the whole document ***
• **BEN STRASSER ET AL: "Space-efficient, Fast and Exact Routing in Time-dependent Road Networks", ARXIV.ORG, CORNELL UNIVERSITY LIBRARY, 201 OLIN LIBRARY CORNELL UNIVERSITY ITHACA, NY 14853, 28 October 2019 (2019-10-28), XP081522002,**

## Description

### FIELD

Embodiments of the present disclosure relate to a method and system for time-dependent vehicle routing. Embodiments of the present disclosure particularly relate to space-efficient, fast and exact routing in time-dependent road networks.

### BACKGROUND

In vehicle routing, shortest paths can be computed in massive road networks with traffic predictions. Existing techniques may follow a two-phase approach: In an offline, pre-processing step, a database index is built. The index only depends on the road network and the traffic patterns. The path start and path end are the input of the query phase, in which shortest-paths are computed. Existing techniques have a large index size, slow query running times, or may compute suboptimal paths.

An overview of these techniques is disclosed in the lecture held by the inventor: Tim Zeitz: "Algorithmen fur Routenplanung", 1 July 2019 (2019-07-01), XP055665560, (https://i11.www.iti.kit.edu/_media/teaching/sommer2019/ routenplanung/chap2-timedependent-preprocessing.pdf). A description of a technique for caclulating time-dependent contraction hierarchies can be found in VEIT BATZ G ET AL: "Minimum time-dependent travel times with contraction hierarchies", ACM JOURNAL OF EXPERIMENTAL ALGORITHMICS, ASSOCIATION OF COMPUTING MACHINERY, NEW YORK, NY, US, vol. 18, 19 April 2013 (2013-04-19), pages 1.1-1.43. The technique of Customizable Contraction Hierarchies is described in Julian Dibbelt ET AL: "Customizable Contraction Hierarchies" In: "12th European Conference on Computer Vision, ECCV 2012", 24 August 2015 (2015-08-24), Springer In view of the above, new methods and systems for time-dependent vehicle routing, that overcome at least some of the problems in the art are beneficial.

### SUMMARY

In light of the above, a method and a system for time-dependent vehicle routing are provided. It is an object of the present disclosure to provide a more efficient routing of vehicles to reduce, for example, processing times, the use of processing resources, vehicle emissions, such as carbon dioxide emission, and this like.

Further aspects, benefits, and features of the present disclosure are apparent from the claims, the description, and the accompanying drawings.

According to an independent aspect of the present disclosure, a method for time-dependent vehicle routing in a road network according to claim 1 is provided.

Preferably, the shortcut between the first node and the second node corresponds to a shortest travel time between the first node and the second node for a given time.

Preferably, the shortcut between the first node and the second node bypasses exactly one further node of the travel path.

Preferably, the method further includes navigating a vehicle according to the selected travel path. Preferably, the method further includes providing a table including two or more time intervals for arrival at a node and labels, wherein each time interval of the two or more time intervals has at least one respective shortcut allocated thereto.

Preferably, the providing of the table includes: determining a shortcut for each time interval corresponding to a shortest travel time for the travel path; and allocating the determined shortcut to the time interval.

Preferably, the determining of the shortcut for each time interval corresponding to the shortest travel time for the travel path includes: calculating a weight for each of a plurality of shortcuts between the first node and the second node.

Preferably, each time interval has unpacking information associated therewith, wherein the unpacking information allows to unpack the shortcut to obtain the individual time-dependent sub travel times.

Preferably, the determining of the shortcut for each time interval corresponding to the shortest travel time for the travel path includes: approximating the plurality of shortcuts; and merging two approximated shortcuts of the approximated plurality of shortcuts.

Embodiments are also directed at systems for carrying out the disclosed methods and include system aspects for performing each described method aspect. These method aspects may be performed by way of hardware components, a computer programmed by appropriate software, by any combination of the two or in any other manner. Furthermore, embodiments according to the invention are also directed at methods for operating the described system. It includes method aspects for carrying out every function of the system.

According to a further aspect of the present disclosure, a machine-readable medium is provided. The machine-readable medium includes instructions executable by one or more processors to implement the method of the embodiments of the present disclosure.

The (e.g. non-transitory) machine readable medium may include, for example, optical media such as CD-ROMs and digital video disks (DVDs), and semiconductor memory devices such as Electrically Programmable Read-Only Memory (EPROM), and Electrically Erasable Programmable Read-Only Memory (EEPROM). The machine-readable medium may be used to tangibly retain computer program instructions or code organized into one or more modules and written in any desired computer programming language. When executed by, for example, one or more processors such computer program code may implement one or more of the methods described herein.

According to an independent aspect of the present disclosure, a system for time-dependent vehicle routing is provided. The system includes one or more processors; and a memory (e.g. the above machine-readable medium) coupled to the one or more processors and comprising instructions executable by the one or more processors to implement the method of the embodiments of the present disclosure.

## BRIEF DESCRIPTION OF THE DRAWINGS

So that the manner in which the above recited features of the present disclosure can be understood in detail, a more particular description of the disclosure, briefly summarized above, may be had by reference to embodiments. The accompanying drawings relate to embodiments of the disclosure and are described in the following:

FIG. 1            shows a flowchart of a method for time-dependent vehicle routing according to embodiments described herein;

FIG. 2            shows a graph of a small road network with predicted travel times for each road segment;

FIG. 3            shows a shortcut bypassing several nodes;

FIG. 4            shows travel time functions for two different paths between the same start and end node;

FIG. 5            shows a shortcut with associated time-dependent unpacking information; and

FIGs. 6 to 9      show various algorithms.

## DETAILED DESCRIPTION OF EMBODIMENTS

Reference will now be made in detail to the various embodiments of the disclosure, one or more examples of which are illustrated in the figures. Within the following description of the drawings, the same reference numbers refer to same components. Generally, only the differences with respect to individual embodiments are described. Each example is provided by way of explanation of the disclosure and is not meant as a limitation of the disclosure. Further, features illustrated or described as part of one embodiment can be used on or in conjunction with other embodiments to yield yet a further embodiment. It is intended that the description includes such modifications and variations.

## 1. Introduction

The present disclosure uses CATCHUp (Customizable Approximated Time-dependent Contraction Hierarchies through Unpacking), which is an algorithm that simultaneously solves problems of the prior art related to a large index size, slow query running times, and suboptimal paths. The solution proposed by the present disclosure achieves up to 30 times smaller indexes than state-of-the-art computing approaches. Additionally, the index can be updated within a few minutes if traffic patterns change.

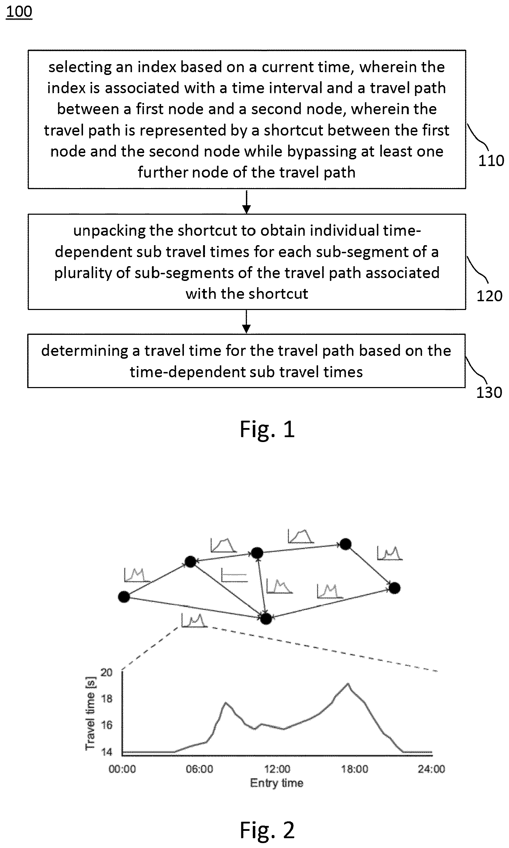

The above is achieved by a method 100 for time-dependent vehicle routing as it is illustrated in FIG. 1. The method 100 includes in block 110 as selecting of an index based on a current time, wherein the index is associated with a time interval and a travel path between a first node and a second node, wherein the travel path is represented by a shortcut between the first node and the second node while bypassing at least one further node of the travel path; in block 120 an unpacking of the shortcut to obtain individual time-dependent sub travel times for each segment of a plurality of segments (between nodes) of the travel path associated with the shortcut; and in block 130 a determining of a travel time for the travel path based on the time-dependent sub travel times.

Routing in road networks is a well-studied topic with a plethora of real-world applications. The core problem setting consists of computing a fastest route between a source and a target. The idealized problem can be formalized as the classic shortest path problem. Streets are modelled as arcs. Street intersections are modelled as nodes. Travel times are modelled as scalar arc weights. Unfortunately, this idealized view does not model important real-world effects. An important example are recurring commuter congestions. The present disclosure therefore considers an extended problem setting in which arc weights are time-dependent. The weight of an arc is a function of the moment where a car enters the arc. FIG. 2 depicts an example.

Web-based routing services such as Google, Baidu, Yandex, Bing, Apple, or HERE Maps are ubiquitous. They all share a similar setup in which a small set of servers answers queries of many users. Computing routes using Dijkstra's algorithm is possible. However, the large query running times of several seconds per path would require a huge number of servers. This is cost prohibitive.

To reduce the number of servers and to enable interactive applications, it is crucial to answer queries quickly. To achieve small query running times, a two-phase approach can be used. In the first phase, the pre-processing, a database index is constructed. The index only depends on the road networks and the time-dependent arc weights. In the second phase, shortest paths are computed by querying this database index. Beside reducing the number of servers, it is also desirable to have small index size. This reduces the costs per server.

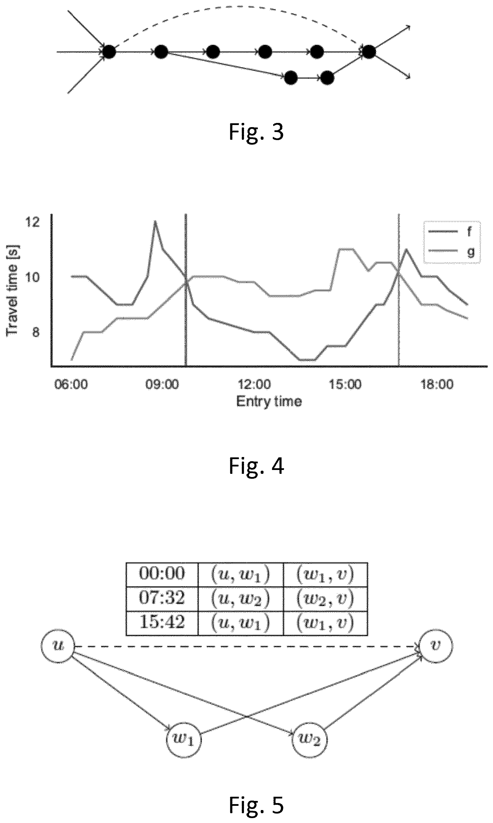

Contraction Hierarchies (CH) are a popular and effective technique to construct such indexes. The core idea is to introduce additional arcs called shortcuts. Shortcuts replace parts of an input graph like in FIG. 3. They allow bypassing these parts of the input graph. When computing shortest paths, a small number of shortcuts are explored instead of a large number of arcs in the input graph. This approach achieves speedups of several orders of magnitude over Dijkstra's algorithm. However, such implementations generally use scalar weights and do not solve the time-dependent setting.

An adaptation for the time-dependent setting uses periodic piecewise linear functions to model travel times. The functions are represented as a sequence of breakpoints. A function may be attached to every shortcut. Let $s$ be a shortcut and $P$ the path bypassed by $s$. The travel time along $s$ must be equal to the travel time along $P$, i.e., $s$'s function is the composition of the functions along the arcs of $P$. Unfortunately, the number of breakpoints in $s$'s function corresponds to the accumulated number of breakpoints of the composing functions. Shortcuts aggregate the complexity of paths they represent, rather than bypassing it. This leads to prohibitive memory consumption. Solutions based on function approximations can be used. Unfortunately, they either lead to slower or inexact queries. To make time-dependent CHs really tractable, a better function compression schema is crucial. Such a schema is provided by the present disclosure.

The shortest path between two nodes may change less frequently over time than the travel time between the nodes. Oftentimes, it does not change at all. For example, going via a highway may be slow due to congestion but is usually still the fastest option. Consider the functions $f$ and $g$ in FIG. 4. Both functions have a significant number of breakpoints. The function $h = min(f, g)$ has a similar number of breakpoints as $f$ and $g$. If one stores $h$ explicitly, a memory proportional to the number of breakpoints of $f$ and $g$ is required. However, according to the present disclosure, $h$ is not stored explicitly. Instead, the time intervals in which $f$ is smaller than $g$ is stored. In the example, it is stored that from 6:00 on g wins until 9:45. From this time on, $f$ wins until 16:45. After this time, $g$ wins again. There are significantly fewer time points in which $h$ switches from $f$ to g and vice versa, than there are breakpoints. Therefore, a more compact representation can be achieved.

Formulated differently, in the algorithm base variant at each shortcut $s$ only the information necessary to unpack $s$ into the corresponding input path $P$ is stored. Using this information, a path that uses shortcuts can be translated into a path that only uses input graph arcs. In the input graph, the travel time along the whole path can be computed by iteratively evaluating the travel times of each input arc. Evaluating the travel time along a path is faster than executing Dijkstra's algorithm on the input graph. The query algorithm is a modified CH query that unpacks shortcuts on-demand within the search space. To allow further pruning, the minimum and maximum travel times of each shortcut are stored.

While this compression schema works well for query computations, approximated shortcut travel time functions can be maintained during index construction. The index construction can be done on one expensive server. Afterwards, the computed index can be distributed to a set of inexpensive query servers.

## Related Work

Routing in road networks has been extensively studied in the past decade. Several time-independent speed-up techniques have been generalized to the time-dependent setting. ALT, which is an approach using landmarks to obtain good A* potentials has been generalized to TD-ALT and successively extended with node contraction to TD-CALT. Even when combined with approximation, TD-CALT queries may take longer than 10ms on continental sized graphs. SHARC, which is a combination of ARC-Flags with shortcuts which allows unidirectional queries was also extended to the time-dependent scenario. It can additionally be combined with ALT yielding L-SHARC. SHARC can find short paths in less than a millisecond but does not always find a shortest path. MLD/CRP has been extended to TD-CRP, which can be used in a time-dependent setting. TD-CRP requires approximation to achieve reasonable memory consumption. TD-CRP also does not always find a shortest path. Another approach is FLAT and its extension CFLAT. CFLAT features sublinear query running after subquadratic pre-processing and guarantees on the approximation error. Unfortunately, pre-processing takes long in practice and generates a prohibitively large index size.

There are several approaches based on CHs: Time-dependent CHs (TCH), inexact TCHs, and Approximated TCHs (ATCH). TCHs achieve great query performance but at the cost of a huge index size on state-of-the-art continental sized instances. Index size can be reduced at the cost of exactness (inexact TCHs) or query performance (ATCHs). An open-source reimplementation named KaTCH exists. A simple heuristic named TD-S samples the time-dependent functions using a fixed set of scalar values. It has a manageable index-size and fast query times but does not always find a shortest path.

**Contribution**

The present disclosure provides Customizable Approximated Time-dependent Contraction Hierarchies trough Unpacking, a time-dependent generalization of Customizable Contraction Hierarchies and a thoroughly engineered implementation. The implementation achieves fast and exact queries with performance competitive to TCH queries while requiring up to 30 times less memory. Pre-processing is split into a metric independent phase and a metric dependent customization phase. The present disclosure describes several optimizations to the customization necessary to achieve good customization performance in the time-dependent scenario. The present disclosure also present algorithms which allow to employ approximation during the customization without sacrificing exactness. This allows to update the metric within a few minutes on modern production-grade continental sized instances. Finally, the present disclosure proposes an improved ATCH query algorithm. Both the query algorithm and some of the customization optimizations could also be employed by (A)TCHs.

**2. Preliminaries**

Road networks are models as directed *graphs G* = (*V, A*). A *vertex v* $\in$ *V* represents an intersection and an *arc* (*u, v*) $\in$ *A* represents a road segment. Let *n* = |*V*| denote the number of nodes and *m* = |*A*| the number of arcs. A path is a sequence of vertices [*v₁, ..., vₖ*] such that (*vᵢ, vᵢ₊₁*) $\in$ *A*.

Every arc *a* has a *travel time function* mapping departure time to travel time:

$$f_a \; : \; \mathbb{R} \; \rightarrow \; \mathbb{R}^{>0}$$

These functions can be referred to as *travel time profiles.* Similar to competing approaches, it us assumed that travel time functions fulfil the *FIFO property*, that is for any $\sigma, \tau \in \mathbb{R}$ with $\sigma \le \tau$, $\sigma + f(\sigma) \le \tau + f(\tau)$ has to hold. Informally, this means that it is never possible to arrive earlier by starting later. If there are arcs that do not fulfil the FIFO property, the shortest path problem becomes *NP*-hard. In the present implementation, travel time functions are periodic piecewise linear functions represented by a sequence of breakpoints. The number of breakpoints is denoted by |*f*|. However, the present disclosure is agnostic to the representation of travel time functions and will work as well with other function classes supporting the following operations:

An Eval operation is used which calculates the value $f(\tau)$ of a function $f$ at time $\tau$. Eval is extended to paths by evaluating the arcs successively:

$$\mathrm{EVAL}([v_1, v_2, ..., v_i], \tau) = \mathrm{EVAL}(f_{(v_1, v_2)}, \tau) + \\ \mathrm{EVAL}([v_2, ..., v_i], \tau + \mathrm{EVAL}(f_{(v_1, v_2)}, \tau))$$

A Union operation is used which combines two functions with disjoint domains, for example two different segments of a piecewise linear function:

$$\mathrm{UNION}(f, g)(\tau) = \begin{cases} f(\tau) & \text{if } \tau \in \mathrm{domain}(f) \\ g(\tau) & \text{else} \end{cases}$$

To chain the travel time functions of two consecutive arcs, the Link operation is defined. Given two travel time functions $f$ and g for arcs (*u, v*) and (*v, w*), the linked travel time function has to fulfil the following property: Link (*f , g*) = $f(\tau)$ + $g(f(\tau)$ + r) $\forall$ $\tau \in \mathbb{R}$. Then, Link (*f, g*) is the travel time function of the path [*u, v, w*]. To combine different travel time functions for paths with the same start and end, the Merge operation is defined. For two travel time functions of different [*u, ..., v*] paths, the merged travel time functions consists of the faster travel time at each point in time: Merge

$$(f, g)(\tau) = \min\big(f(\tau), g(\tau)\big) \forall \tau \in \mathbb{R}$$ . The result of Merge (*f, g*) is the minimum travel time function between *u* and *v* on the given paths.

Both linking and merging can be implemented by simultaneously sweeping over the breakpoints of both functions. Periodic piecewise linear functions fulfilling the FIFO property are closed under linking and merging. A linked travel time function *link* (*f, g*) has at most |*f*| + |*g*| breakpoints. A merged travel time function *merge* (*f, g*) can contain one breakpoint per intersection of segments of the input travel time functions and breakpoints from the input travel time functions which is in *O* (|*f*| + |*g*|).

Given a departure time $\tau$ and vertices s and *t*, an earliest-arrival query asks for the minimum time to travel from s to *t* starting from s at $\tau$. Such a query can be handled by Dijkstra's algorithm with little modifications. The algorithm keeps track of the earliest known arrival time $ea_v$ at each vertex *v*. These labels are initialized with $\tau$ for s and $\infty$ for all other vertices. In each step the next vertex *u* with minimal earliest arrival $ea_u$ is extracted from a priority queue and all outgoing arcs are relaxed. To relax an arc (*u, v*), the algorith check if $ea_u + f_{(u,v)}(ea_u) < ea_v$ and updates the arrival and the queue position of *v* if the arrival time can be improved. The queue is initialized with *s*. Once *t* is extracted from the queue, one obtains the final earliest arrival at *t*. This algorithm is referred to as *TD-Dijkstra*. When nodes are popped from the queue, their earliest is final. This property is denoted as *label-setting.*

The *A\* algorithm* can be seen as an extension to Dijkstra's algorithm. It reduces the size of the search space by guiding the search towards *t*. Each node *u* has a potential $\rho_t(u)$ which is an estimate of the distance to *t*. The priority queue is then ordered by $ea_u + Pt\ (u)$.

Contraction Hierarchies are a speed-up technique for road networks. All nodes are ranked by some measure of importance. Nodes with higher rank should be part of shorter paths. During pre-processing, all nodes are contracted in ascending order of their importance. Contracting a node v means conceptually removing it from the network but preserving all shortest distances among the remaining nodes. This is achieved by inserting *shortcut arcs* between the neighbours of *v* if a shortest path between them goes over *v*. A single shortcut always bypasses exactly one node but the arcs between the contracted node and its neighbours may also be shortcuts. Thus, recursively unpacking shortcuts may yield much longer bypassed paths. The result of the pre-processing are two augmented graphs ($G^\wedge$, $G^\vee$), also called a Contraction Hierarchy. $G^\wedge$ contains only outgoing arcs to higher ranked nodes. $G^\vee$ contains only incoming arcs from higher ranked nodes. Shortest-path queries can be answered by performing a bidirectional Dijkstra search where the forward search runs on $G^\wedge$ and the backward search on $G^\vee$. The construction of the hierarchy guarantees that this algorithm will find a shortest up-down-path which has the correct length.

Contraction Hierarchies use the metric to determine the importance of each node. If the metric changes, the entire hierarchy needs to be recomputed which is computationally expensive. Customizable Contraction Hierarchies (CCHs) avoid this by splitting the pre-processing into two phases. In the first metric-independent phase, the nodes are contracted based on a nested dissection order. Since no metric is available, all possible shortcuts are inserted. In the second phase, called customization, a metric is applied to the graph and the weights of all shortcuts are determined by a bottom-up sweep over all arcs of the graph. The result is a valid Contraction Hierarchy and the same query algorithm as for classical CHs can be employed.

### 3. Shortcut Data Structure

In a non time-dependent setting, only a single number is associated with each shortcut. It represents the weight of the entire path bypassed by the shortcut. Applying the same idea to the time-dependent setting would mean storing the travel time profile of the shortcut. But this is very expensive in terms of memory consumption. The shortcut profile will usually contain about as many breakpoints as all original arcs in the represented path combined. Rather than explicitly storing this profile, according to the present disclosure only information to unpack the shortcut to the best path are stored for each point in time and a static upper and lower bound.

Formally, for each shortcut arc *s*=(*u, v*) there is a lower bound $\underline{b}_s$, an upper bound $\overline{b}_s$ and set of time-dependent *expansions* $X_s$ for unpacking. For an expansion x E $X_s$, the time during which *x* represents the shortest path is denoted as the *validity interval* $\Pi_x$ of *x* and the lower node of the triangle [*u*, $w_x$, v] as $w_x$. Since a shortcut always expands to a path of length two, knowing the middle node is sufficient for unpacking. In the present implementation, the expansion information is represented as an array of triples ($\tau$, (*u, w*), (*w, v*)). $\tau$ is the beginning of the validity interval and (*u, w*) and (*w, v*) are arc ids. This information can be stored in 16 bytes for each entry -- 8 bytes for the timestamp and 4 bytes for each arc id. FIG. 5 depicts an example of a shortcut with expansion information. A shortcut could also represent an original arc or no arc at all during a certain time interval. Both these cases are represented as special arc id values.

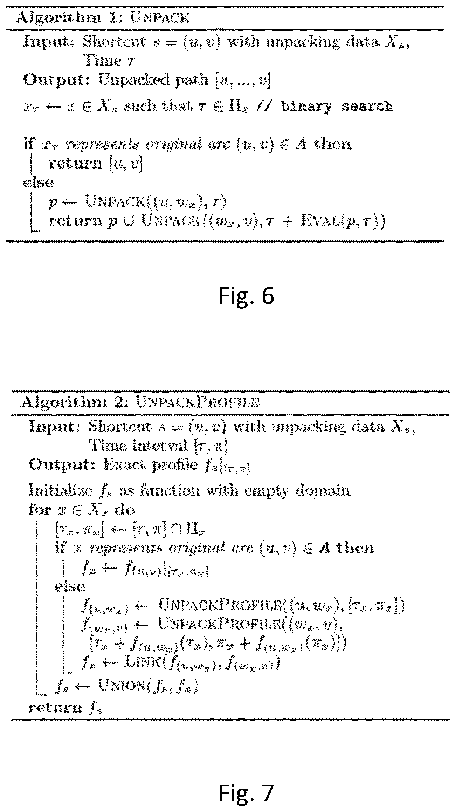

There are several operations which require to unpack a shortcut s: evaluating the travel time $f_s(\tau)$ of a shortcut, marking the unpacked original arcs as contained in a search space or constructing the travel time profile $f_s$. The algorithm in FIG. 6 depicts how to achieve this. To unpack a shortcut at a point $\tau$ in time, first the relevant expansion *x* is determined

such that $\tau \in \Pi_x$ This can be done performing a binary search in $X_s$. Then the operation is recursively applied to $(u, w_x)$ at $\tau$ and to $(w_x, v)$ at $\tau + f_{(u,w_x)}(\tau)$. The recursion stops when reaching original non-shortcut arcs. Evaluating the travel time of the first arc is always necessary to determine the correct point in time for the second arc. The travel time of a shortcut can be evaluated by unpacking the path and then evaluating the travel times of the original arcs successively. When a shortcut is unpacked only for travel time evaluation, the unpacking can be skipped if the upper and lower bounds are equal. In that case the travel time of the shortcut is constant.

Constructing the travel time profile of a shortcut is conceptually similar and shown in the algorithm of FIG. 7. Shortcuts are recursively unpacked until arcs of the original graph are reached where the exact travel time functions are available. However, in this case one may need to unpack several different expansions and combine them with the Union operation. For each expansion it can be checked if its validity overlaps with the time range for which one wants to construct the profile. If so, one retrieves the profile for the first arc during this overlap. Then, one calculates the profile for the second arc during the overlap shifted using start and end of the profile of the first arc. Both profiles are then linked and appended to the profile of the shortcut.

Linking two shortcuts $(u, w)$ $(w, v)$ is like creating a new shortcut $s$ with $\underline{b}_s := \underline{b}_{(u,w)}$, $\overline{b}_s := \overline{b}_{(u,w)} + \overline{b}_{(w,v)}$, and $X_s := \{(0, (u, w), (w, v))\}$. Merging is more complicated. To merge two shortcuts r and s one needs to obtain the travel time profiles $f_r$ and $f_s$ using the UnpackProfile operation. By merging the actual profiles $f_r$ and $f_s$, one obtains the times $\Pi_r$ and $\Pi_s$ in which each of them is shorter. The combined expansions contain the expansions from s during the time when $s$ is shorter and the ones from $r$ when $r$ is shorter: $X_{\min(r,s)} := \{(\Pi_r \cap \Pi_x, w_x) \mid x \in X_r\} \cup \{(\Pi_s \cap \Pi_x, w_x) \mid x \in X_s\}$. The combined bounds are each the minimum of the bounds of both shortcuts.

## 4. Algorithms

Hereinafter, algorithms and implementation are described. CCHs is extended into an efficient approach for time-dependent routing using the shortcut data structure described above. CCHs follow a three-phase approach. The first phase is a metric-independent pre-processing phase. In the second phase, called customization, metric dependent pre-processing will be performed. Finally, in the third phase, shortest-path queries can be answered. Each phase is covered in turn and first the classical CCH algorithms are described before presenting the present adaptation.

### 4.1 Metric-Independent Pre-processing

Metric-independent pre-processing is the same as for classical CCHs. Two steps are performed. First, one measures an importance for each node. In CCHs, this is done using a nested dissection order. For that, a small separator is searched. Removing the separator splits the network into two (or more) disconnected components. The nodes in the separator get the highest ranks assigned. The process is then applied recursively to each of the disconnected components. One can use InertialFlowCutter, which is a combination of InertialFlow and FlowCutter, to calculate the order.

Second, one computes the CH and insert shortcuts into the graph. This is done by iteratively contracting nodes from lowest to highest rank. Contracting a node means removing it from the graph and inserting shortcuts between its neighbours unless they are already connected. Since no metric is available, all potential shortcuts must be inserted. The neighbours of each contracted node will become a clique.

A slightly modified contraction algorithm is used inspired by a linear-time graph cordiality check. When contracting a node, one does not connect all neighbours with each other. Rather, all neighbours of the current node are inserted into the neighborhood of its lowest ranked neighbour. The end result is the same. This algorithm can be implemented to run in linear time in the size of the output graph.

### 4.2 Customization

During customization, the weights of all shortcuts can be computed. Shortcut weights are initialized to infinity. Shortcuts always bypass paths over exactly one node (see FIG. 5). To calculate the weight of a shortcut, the shortest among those bypassed paths is found. That is, to calculate the weight of shortcut $(u, v)$ one finds the shortest of all *lower triangles* $[u, w, v]$ where $w$ has a lower rank than $u$ and $v$. This yields a correct Contraction Hierarchy if the weights of the arcs $(u, w)$ and $(w, v)$ are always final, before the weight of $(u, v)$ is determined. This can be achieved by processing arcs by their lower ranked endpoint. For each arc all lower triangles will be enumerated, and the arc gets the weight of the shortest triangle assigned.

In the customization phase, the bounds and the unpacking information are computed for each shortcut. One can iterate over all shortcuts in a bottom-up fashion. The shortcuts are traversed in order of their lower ranked node. For each shortcut, all lower triangles are enumerated. For each triangle it is determined, if it is the shortest path at certain points in time and if so, add it to the shortcut's expansion information. This requires to obtain the travel time profile of the triangle through linking and merge it with the shortcut's travel time profile. Since the linking and merging operations are quite expensive, one can implement several optimizations which are describe in this section.

### Avoiding Unnecessary Operations

Many link and merge operations can be avoided by first checking the operation's necessity using the bounds. Consider a triangle $[u, w, v]$ and a shortcut $s = (u, v)$. Before linking $f_{(u,w)}$ and $f_{(w,v)}$, it is checked if $\overline{b}_s \leq \underline{b}_{(u,w)} + \underline{b}_{(w,v)}$. If so, the linked path would be dominated by the shortcut, and one can skip linking and merging completely. If not, one can link $f_{(u,w)}$ and $f_{(w,v)}$ and obtain $f_{[u,w,v]}$. One still can skip merging if one function is strictly smaller than the other, that is either $\overline{b}_s \leq \min(f_{[u,w,v]})$ or $\max(f_{[u,w,v]}) \leq \underline{b}_s$. Even if the bounds overlap, one function might still dominate the other. To check for this case, one can simultaneously sweep over the breakpoints of both functions, determining the value of the respectively other function by linear interpolation. Only when this check fails, the actual merge operation is performed.

### Sorting Lower Triangles

In non-time-dependent CCHs, the work performed per triangle is very small. Two numbers need to be added and compared to a third which may be updated. In the time-dependent case, performing linking and merging is much more expensive and it can be beneficial to perform some extra work to avoid as many link and merge operations as possible. To this end, one can process the lower triangles $[u, w, v]$ of each arc in a specific order by first sorting them ascending by $\underline{b}_{(u,w)} + \underline{b}_{(w,v)}$. This way, shorter triangles are processed first and most longer triangles can be skipped completely due to the bound checks.

### Static Pre-customization

Due to the metric-independent construction, CCHs may contain more shortcuts than actually necessary. CHs avoid this problem by performing witness searches. Unnecessary shortcuts in CCHs can be removed by performing a so called perfect customization. During the perfect customization, shortcuts are processed in a top down order. For each shortcut $(u, v)$, all triangles $[u, w, v]$ where w is either the highest ranked or middle ranked node are enumerated. If the weight of $[u, w, v]$ is less or equal to the weight of $(u, v)$, the shortcut is not required and can be marked for removal. After all shortcuts have been processed, the marked shortcuts can be removed.

To establish preliminary bounds and to remove unnecessary shortcuts, one first performs a pre-customization using only upper and lower bounds. Having processed all shortcuts bottom-up, a copy of each shortcut's lower bound $b'_s$ can be made. Now, all shortcuts are processed top-down, merging them with upper and intermediate triangles. Afterwards, a shortcut s can be removed if $\overline{b}_s < \underline{b}'_s$ because a shorter path than s exists via upper or intermediate triangles.

The preliminary bounds obtained by the pre-customization are kept since they allow skipping additional link and merge operations. This requires some additional care when updating bounds during the customization with the exact travel time functions. As before, upper bounds are updated by taking the minimum of the current upper bound and the new upper bound. Note that a shortcut might temporarily have a profile with values greater than the upper bound stored at the shortcut. However, updating lower bounds like this would have no effect. The lower bound obtained during pre-customization is guaranteed to be smaller or equal to any actual lower bound a function on the shortcut might have. But this bound is not necessarily as tight as possible. After the final profile for a shortcut is obtained, the lower bound is updated to the maximum of the lower bound from the pre-customization and the actual profile.

### Reusing Intermediate Results

Merging shortcuts requires that one knows their travel time profiles. While it is possible to calculate the profiles by unpacking the shortcuts and linking the involved original arcs, one can get around this by reusing the results of previous merge operations. The order of the shortcut iteration guarantees that all shortcuts in the lower triangles have already been processed. The results of these previous merge operations are kept. Only when all shortcuts with $(u, v)$ where $u$ is the lower ranked node have been processed, all intermediate results are removed from shortcuts $(w, u)$ where $u$ is then the higher ranked node. This way, one does not need to unpack any shortcuts during the customization.

### Parallelization

The present disclosure employs both loop based and task based parallelism to distribute the workload of the customization among several cores. The original CCH suggests processing shortcuts in levels. The level of a shortcut is determined based on the rank of its lower ranked node. All shortcuts of each level can be processed in parallel. This approach is employed to process arcs in the top-level separators. But since this approach requires a synchronization step on each level and may lead to bad load balancing, it is switched to a different strategy whenever possible. A task-based parallelism approach utilizing the separator decomposition of the graph can be used. Each task is responsible for a subgraph *G'*. Removing the top-level separator in *G'* decomposes the subgraph into two or more disconnected components. For each component a new task is spawned to process the shortcuts in the component. After all child tasks are completed, the shortcuts in the separator are processed utilizing the loop-based parallelization schema. If the size of subgraph *G'* is below a certain threshold the task processes the shortcuts in *G'* directly. The present disclosure uses $n/(\alpha \cdot c)$ as the threshold with *c* being the number of cores and tuning parameter $\alpha$ set to 32.

## Approximation

As one processes increasingly higher ranked shortcuts during customization, the shortcuts represent increasingly longer paths and the associated travel time profiles become more and more complex. This leads to two problems. First, the running time of linking and merging scales with the complexity of the input function. Profiles with thousands of breakpoints lead to slow customization times. Second, storing these functions for later reuse -- even though it is only temporary -- consumes a lot of memory. This is a problem which all hierarchical speed-up techniques for time-dependent road networks have to cope with. TCHs partly mitigates this by optimizing the order towards contracting nodes with shortcuts with low profile complexity first. Since the present disclosure use a predetermined nested dissection order, this is not possible. Additionally, during contraction TCHs swap out shortcuts profiles of already contracted nodes to the disk to reduce memory usage. A possible approach is to reduce the complexity of shortcut profiles by approximating them. This approach is also employed by TD-CRP and in ATCHs.

ATCHs apply approximation only after the contraction is completed to reduce memory usage during query time. This has the advantage that the approximation error on each profile function is known and that the shortcut unpacking information is exact. This allows ATCHs to perform exact queries despite the approximated travel time functions. The downside is that contraction performance still suffers from the shortcut complexity. TD-CRP on the other hand applies approximation during the customization. This solves the performance issues but only at the cost of exactness and unbounded errors (the result of linking two approximated travel time functions with known error bounds may have a much larger error depending on the slopes of the input functions; it would be possible to calculate the actual error bounds on the linked function at runtime, but TD-CRP does not attempt to do this; in practice, the errors stay small). The present approach works around these issues and applies approximation during the customization but still obtains exact shortcut unpacking information, which allows to perform exact queries.

When approximating, not one approximated function but two are sored -- a lower bound function and an upper bound function. These two replace the exact profile stored for later merge operations and will also be dropped when no longer needed. When linking approximated functions, one can link both lower and both upper bound functions. Linking two lower bounds yields a valid lower bound function of the linked exact functions because of the FIFO property. The same argument holds for upper bounds.

Merging approximated shortcuts is slightly more complicated. An objective is to determine the exact unpacking information for each shortcut. One cannot reuse the bound functions as they are only approximations. Thus, one needs to unpack shortcuts and reconstruct their exact travel time functions. But one can use the approximations to avoid unpacking the exact functions for times where no intersections can occur. To identify these parts, the first function's lower bound is merged with the second function's upper bound and vice versa. Where the bounds overlap, an intersection might occur. Then, the exact functions in the overlapping parts unpacked and the exact merging is performed. To obtain upper and lower bounds of the merged function, both lower bounds and both upper bounds are merged.

To perform the actual approximation, ATCH and TD-CRP make use of the algorithm by Imai and Iri. Given a maximum error bound $\varepsilon$, this algorithm can compute in linear time the piecewise linear function with the minimum number of breakpoints within the given error bound. The errors may be one-sided for the computation of bound functions. The great theoretic guarantees of this algorithm come at the cost of considerable implementation complexity and high constant runtime factors. The inventors implemented this algorithm but also another much simpler approximation algorithm by Douglas and Peucker. This algorithm also takes a maximum error $\varepsilon$ as an input parameter. It starts with the first and the last breakpoint of the input function and then determines the point with the greatest distance to the line between the start and end point. If this distance is smaller than $\varepsilon$ the error bound holds for all points and the two points are returned as the approximated function. If not, the point is inserted into the approximated function and the algorithm recurses on the partials from start to the inserted point and from inserted point to end. This algorithm may take $O(n^2)$ running time in the worst case.

To obtain actual bound functions, first an approximation is computed. Then, $\varepsilon$ is added or subtracted to the value of each breakpoint to obtain an upper or lower bound, respectively. This yields valid upper or lower bounds, but they may not be as tight as possible. Therefore, one can iterate over all approximated points and move each point back towards the original function. Both adjacent segments in the approximated functions have a minimum absolute error to the original function. The breakpoint is moved by the smaller of the two errors. This yields sufficiently good bounds.

Preliminary experiments showed that compared to Imai-Iri, the Douglas-Peucker implementation produces insignificantly more breakpoints and also runs faster due to better constants. Also, the implementation needs 30 instead of 400 lines of code, so the embodiments of the present disclosure may use the Douglas-Peucker variant.

Travel time functions are approximated whenever functions have more than $\beta$ breakpoints after merging. This includes already approximated functions. Both $\beta$ and the maximum error $\varepsilon$ are tuning parameters. Note that the choice of $\varepsilon$ does only affect performance and not correctness.

### 4.3 Queries

In this section, the query algorithms are presented. It is started by transferring an elimination tree query algorithm into the time-dependent setting. This approach suffers from bad performance since evaluating the travel time of a shortcut requires expensive unpacking. Several optimizations are proposed which help to unpack fewer shortcuts and make the unpacking less expensive. While the traditional CH query algorithm can be applied to CCHs as well, the construction of the CCH makes a more efficient algorithm possible based on the elimination tree. In the elimination tree, the parent of each node is the lowest ranked upward neighbour in the augmented graph. The set of nodes in the upward search space from a node v is exactly the set of all ancestors of v in the elimination tree. This allows for the following simplified query algorithm:

Starting from both s and *t*, walk up the elimination tree. For each node, relax all outgoing (incoming) arcs to (from) higher ranked neighbours. Once the searches meet at a common ancestor, track the total distance as the sum of forward and backward distances to the common ancestor. Once both directions reach the root node, the shortest distance has been found. This algorithm does not require a priority queue, but it will usually traverse more nodes than the traditional CH query. That makes it a great fit for long-range queries, but the performance on short-range queries is quite poor. Even when nodes are close to each other, all their ancestors up to the root are traversed and their arcs relaxed. An optimization can be used to avoid this: only relax shortcuts from nodes when the node's distance is smaller than the tentative best distance between s and t. While this does not avoid traversing the entire tree, it avoids the relaxation of unnecessary arcs which is enough to achieve competitive running times on short range queries.

### Naive time-dependent elimination tree query

To adapt the elimination tree query for the time-dependent case, a few modifications can be done. First, to evaluate the travel time of shortcuts, the time-dependent unpacking operation described in FIG. 6 is performed and the travel time is evaluated through the unpacked path. Second, one does not know the arrival time at t and its ancestors. Thus, one cannot directly evaluate the travel time of their arcs. One can avoid this problem by just marking all backward shortcuts in the search space of t. The actual evaluation is deferred and performed only after the forward search is done. The complete algorithm works as follows:

Starting from *t*, walk up the elimination tree. For each node, mark each edge to higher ranked neighbours and store it in a list at the neighbour. Once the elimination tree root is reached, switch to the forward direction. One maintains an earliest arrival label for each node, similar to Dijkstra's algorithm. The earliest arrival at *s* is initialized to the departure time. Starting from s, walk up the elimination tree. For each node, relax all shortcuts. Relaxation means evaluating the travel time as described with respect to the shortcuts, and, if possible, improving the earliest arrival label at the shortcut's head. Once the root is reached, walk back down the path to *t*. For each node, relax all marked arcs. Having reached *t*, one knows the desired earliest arrival at *t*.

### Elimination tree interval query

The algorithm evaluates many shortcuts which do not contribute to the shortest path between *s* and *t*. One can use the bounds stored at the shortcuts to limit the search space to a subgraph, which contains the actual shortest path. This subgraph is denoted as a *corridor.* The corridor is established through an *elimination tree interval query.* For an interval query, instead of maintaining an exact earliest arrival for each node, there is an interval of possible earliest arrivals. Several paths may contribute to the arrival interval at a node, so one needs to maintain a set of labels for each node. Since it is only worked with bounds, backward shortcuts can be relaxed directly. The complete algorithm works as follows:

At each node, maintain an earliest arrival interval and a set of labels which contributed to the arrival interval. Each label contains the earliest arrival lower bound through its path and the id of the previous node on the path. Starting from *s* and *t* walk up the path to the elimination tree root. Walking both paths can be interleaved by always first processing the direction with the lower ranked current node. For each node, all shortcuts to higher ranked neighbours are relaxed. Relaxing a shortcut means constructing a corresponding label and updating the earliest arrival interval at the target node. If the labels lower bound on earliest arrival is earlier than the previous upper bound on earliest arrival, the label needs to be saved. Once the nodes earliest arrival interval is final, all labels with lower bounds greater than the upper bounds of the nodes earliest arrival interval can be removed. When both searches meet at a common ancestor, a tentative distance interval from $s$ to $t$ can be obtained. Common ancestors of $s$ and $t$ which contribute to the optimal distance interval are stored in a set of *meeting nodes.* Whenever the earliest arrival of a node is always later than the upper bound on the distance between $s$ to $t$, one can skip shortcut relaxation entirely. Once both searches have reached the elimination tree root, one can construct the shortest-path corridor. It is started by marking all meeting nodes as contained in the corridor. Then, the paths from $s$ and $t$ to the root are walked back down. For each node contained in the search space, one can go over all labels and mark the corresponding shortcuts and nodes as contained in the search space. This yields the desired corridor.

**Basic CATCHUp query**

It would be possible to optimize the naive elimination tree query by first performing an interval query and limiting shortcut unpacking to shortcuts in the corridor. But this algorithm would still perform more work than necessary. When shortcuts partly share the same path, one may relax the shared path multiple times. One can avoid this by unpacking shortcuts only on demand. This query algorithm is inspired by the ATCH query algorithm.

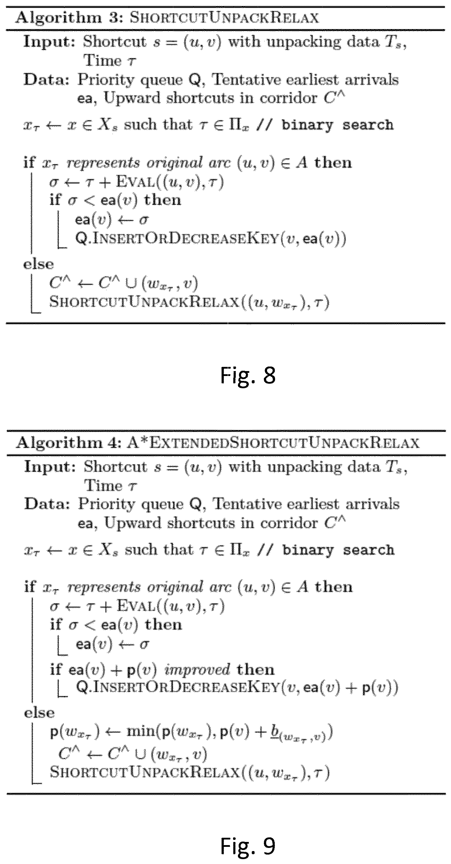

One can start with the corridor obtained from the elimination tree interval query and run time-dependent Dijkstra. The relaxation algorithm is modified to gradually unpack shortcuts and expand the corridor by the unpacked parts. The algorithm in FIG. 8 depicts this relaxation routine. If a relaxed shortcut directly represents an original arc, one knows the exact travel time profile, and one can just relax the original arc. The earliest arrival of the head node of the original arc is then updated and if it was improved, the node will be inserted into the priority queue. If one encounters a shortcut that needs to be unpacked, one can add the upward shortcut of the expansion to the corridor and recurse on the downward shortcut. Basically, one relaxes the first original arc on the path represented by the shortcut and marks all shortcuts on the path as contained in the search space. Once $t$ is settled, one knows the desired travel time from $s$ to $t$.

While the approach achieves a good trade-off between pre-processing data and query speed, performance of long-range queries on complex graphs may still suffer. This is especially true for setup, since one only stores upper and lower bounds for each shortcut and not upper and lower bound functions, which would have smaller errors. The present disclosure proposes an additional extension to this algorithm which brings the performance of this algorithm almost up to speed with an exact TCH query. One can call this query variant *A\*-extended ATCH query.*

**A\*-extended CATCHUp query**

Recall that A\* changes the priority ordering based on a potential function $P$ which estimates the remaining distance to $t$. The position of node v in the queue is determined by $ea_v + \rho_t(v)$. It can be shown that A\* finds the correct shortest path, if for all arcs $(u, v)$ $w_{(u,v)} - \rho_t(u) + \rho_t(v) >= 0$ holds, where $w_{(u, v)}$ is the static weight of the arc $(u, v)$. If this condition holds, Dijkstra's algorithm is still label-setting and can be used without further modifications. Here, one can use a slightly weaker condition. In the present case, a potential $\rho_{t,\sigma}$ for a target $t$ and arrival time $\sigma$ at $t$ is valid, if for all nodes v $\rho_{t,\sigma}(v)$ is a lower bound of the actual distance of the reverse shortest-path tree to $t$ arriving there at $\sigma$. This condition allows potentials which break Dijkstra's label-setting property. Nodes may be popped several times from the queue. But the condition still guarantees, that once $t$ is popped from the queue, its distance is final. The reason for this is, that for any node $v$ on the shortest path from $s$ to $t$, the key of v in the queue must always be smaller than the key of $t$ because the potential is a lower bound of the actual distance. Thus, all nodes on the shortest path will have been traversed before $t$ is settled.

Now the results of the elimination tree interval query are reused to obtain lower bounds on the distance to $t$ for all nodes. During the elimination tree interval query, one obtained lower bounds for the remaining distance to $t$ from all nodes in the upward search space of $t$. One can propagate these bounds to all other nodes one reaches during the search and obtains lower bounds for them. First, one obtains lower bounds for all nodes in the upward search space of $s$. One uses the lower bounds to $t$ of the meeting nodes and propagates them downwards through the corridor to $s$ by adding the lower bounds of the respective shortcuts. That yields lower bounds to $t$ for all nodes in the corridor. One can now extend the relaxation routine to derive potentials for nodes inserted into the corridor through unpacking. The algorithm in FIG. 9 depicts this routine.

Compared to the algorithm in FIG. 8, there are two modifications. First, the position of a node in the queue must be updated, when either its potential or its earliest arrival was improved. Second, when a shortcut needs to be expanded, one derives a potential for the middle node $w$. For that, one takes the potential of the shortcuts head $v$ and adds the lower bound of second part of the shortcut $(w, v)$. This yields a lower bound for $w$, but only for paths to $t$ over $v$. This may temporarily be an invalid potential if there is another shorter path from $w$ over a node $v'$ to $t$. Nevertheless, the algorithm achieves exact results.

Consider all nodes on the actual shortest path. The ones in the initial corridor all have valid potential. Thus, they will be settled before *t*. When they are settled, the adjacent shortcuts will be unpacked, and unpacked nodes will get valid potentials. This happens before *t* is settled, so all nodes on the shortest path will have valid potentials before *t* is settled, so they will also be settled before *t*. Thus, when *t* is settled, the correct earliest arrival at *t* is known.

Since a variant of Dijkstra's algorithm is performed on the original graph, path unpacking is easy. During arc relaxation a set of parent pointers are maintained, which indicate the parent in the shortest path tree from s. The shortest path to *t* can be recalled by traversing the parents from *t* to the root *s*.

While the foregoing is directed to embodiments of the disclosure, other and further embodiments of the disclosure may be devised without departing from the basic scope thereof, and the scope thereof is determined by the claims that follow.

**Claims**

1. Method (100) for time-dependent vehicle routing in a road network, which is modeled as a directed graph with nodes, which represent intersections, and arcs, which represent road segments, the method being a Customizable Contraction Hierarchies method, and wherein the time-dependent vehicle routing involves determining a travel path between a first node and a second node, the method comprising:

   weighting every arc with a travel time function mapping departure time to travel time;
   contracting all nodes by inserting shortcut arcs between neighbours of a node if a shortest path between the neighbours goes over the node so that the travel path is represented by a shortcut between the first node and the second node;
   wherein
   each shortcut has a lower bound of the travel time function, an upper bound of the travel time function and a set of time-dependent expansions;

   the method further comprising:

   unpacking (120) the shortcut to obtain individual time-dependent sub travel times for each sub-segment of a plurality of sub-segments of the travel path associated with the shortcut using the lower bound, the upper bound and the set of time-dependent expansions of the shortcut; and
   determining (130) a travel time for the travel path based on the time-dependent sub travel times.

2. The method of claim I, wherein the shortcut between the first node and the second node corresponds to a shortest travel time between the first node and the second node for a given time.

3. The method of claim 1 or 2, wherein the shortcut between the first node and the second node bypasses exactly one further node of the travel path.

4. The method of any one of claims 1 to 3, further including:
   navigating a vehicle according to the selected travel path.

5. The method of any one of claims 1 to 4, further including: providing a table including two or more time intervals for arrival at a node and labels ,
   wherein each time interval of the two or more time intervals has at least one respective shortcut allocated thereto.

6. The method of claim 5, wherein the providing of the table includes:

   determining a shortcut for each time interval corresponding to a shortest travel time for the travel path; and
   allocating the determined shortcut to the time interval.

7. The method of claim 6, wherein the determining of the shortcut for each time interval corresponding to the shortest travel time for the travel path includes:
   calculating a weight for each of a plurality of shortcuts between the first node and the second node.

8. The method of any one of claims 5 to 7, wherein each time interval has unpacking information associated therewith, wherein the unpacking information allows to unpack the shortcut to obtain the individual time-dependent sub travel times.

9. The method of claim 6 or 7, wherein the determining of the shortcut for each time interval corresponding to the shortest travel time for the travel path includes:

   approximating the plurality of shortcuts; and
   merging two approximated shortcuts of the approximated plurality of shortcuts.

10. The method of any of claims I to 9, comprising
   in an approximation step, approximating the travel time functions of an arc by the lower bound function and the upper bound function.

11. The method of any of claims 1 to 10, comprising
   using an algorithm of Douglas and Peucker for approximating the travel time function of an arc.

12. The method of any of claims 1 to 11, comprising
   in the customization, sorting lower triangles of a shortcut by ascending sum of the lower bound functions of arcs connecting end nodes of the shortcut to a middle node, processing the triangles with lower sums first and skipping most higher sums.

13. The method of any of claims 1 to 12, comprising

   updating a ranking of a node when either a potential of the node or an earliest arrival time at the node are improved; and
   when expanding a shortcut, deriving a potential for a middle node.

14. A machine readable medium comprising instructions executable by one or more processors to implement the method of any one of claims 1 to 13.

15. A system for time-dependent vehicle routing, comprising:

   one or more processors; and
   a memory coupled to the one or more processors and comprising instructions executable by the one or more processors to implement the method of any one of claims 1 to 13.


**Patentansprüche**

1. Verfahren (100) zur zeitabhängigen Fahrzeugroutenplanung in einem Straßennetzwerk, das als ein gerichteter Graph mit Knoten, die Schnittpunkte darstellen, und Kanten, die Straßenabschnitte darstellen, modelliert ist, wobei das Verfahren ein Customizable-Contraction-Hierarchies-Verfahren ist und wobei die zeitabhängige Fahrzeugroutenplanung Folgendes einschließt:
   Bestimmen eines Fahrtwegs zwischen einem ersten Knoten und einem zweiten Knoten, wobei das Verfahren Folgendes umfasst:

   Gewichten jeder Kante mit einer Fahrwegfunktion, die eine Abfahrtzeit einer Fahrtzeit zuordnet;
   Kontrahieren aller Knoten durch Einfügen von Abkürzungskanten zwischen Nachbarn eines Knotens, wenn ein kürzester Weg zwischen den Nachbaren über den Knoten verläuft, sodass der Fahrtweg durch eine Abkürzung zwischen dem ersten Knoten und dem zweiten Knoten dargestellt wird;
   wobei jede Abkürzung eine untere Grenze der Fahrwegfunktion, eine obere Grenze der Fahrwegfunktion und eine Menge zeitabhängiger Verlängerungen aufweist;
   wobei das Verfahren ferner Folgendes umfasst:

   Entpacken (120) der Abkürzung, um einzelne zeitabhängige Teilfahrtzeiten für jeden Teilabschnitt von mehreren Teilabschnitten des Fahrtwegs, die mit der Abkürzung assoziiert sind, unter Nutzung der unteren Grenze, der oberen Grenze und der Menge zeitabhängiger
   Verlängerung der Abkürzung, zu erhalten; und
   Bestimmen (130) einer Fahrtzeit für den Fahrtweg basierend auf den zeitabhängigen Teilfahrtzeiten.

2. Verfahren nach Anspruch 1, wobei die Abkürzung zwischen dem ersten Knoten und dem zweiten Knoten einer kürzesten Teilfahrtzeit zwischen dem ersten Knoten und dem zweiten Knoten für eine vorgegebene Zeit entspricht.

3. Verfahren nach Anspruch 1 oder 2, wobei die Abkürzung zwischen dem ersten Knoten und dem zweiten Knoten genau einen weiteren Knoten des Fahrtwegs umgeht.

4. Verfahren nach einem der Ansprüche 1 bis 3, das ferner Folgendes enthält:
Navigieren eines Fahrzeugs in Abhängigkeit von dem ausgewählten Fahrtweg.

5. Verfahren nach einem der Ansprüche 1 bis 4, das ferner Folgendes enthält:
Bereitstellen einer Tabelle, die zwei oder mehr Zeitintervalle für die Ankunft an einem Knoten und Labels enthält, wobei jedes Zeitintervall der zwei oder mehr Zeitintervalle mindestens eine jeweilige ihm zugewiesene Abkürzung aufweist.

6. Verfahren nach Anspruch 5, wobei das Bereitstellen der Tabelle Folgendes enthält:

Bestimmen einer Abkürzung für jedes Zeitintervall, die einer kürzesten Fahrtzeit für den Fahrtweg entspricht; und Zuweisen der bestimmten Abkürzung zu dem Zeitintervall.

7. Verfahren nach Anspruch 6, wobei das Bestimmen der Abkürzung für jedes Zeitintervall, die der kürzesten Fahrtzeit für den Fahrtweg entspricht, Folgendes enthält: Berechnen eines Gewichts für jede einer Vielzahl von Abkürzungen zwischen dem ersten Knoten und dem zweiten Knoten.

8. Verfahren nach einem der Ansprüche 5 bis 7, wobei jedes Zeitintervall damit assoziierte Entpackungsinformationen aufweist, wobei die Entpackungsinformationen zulassen, dass die Abkürzung entpackt wird, um die einzelnen zeitabhängigen Teilfahrtzeiten zu erhalten.

9. Verfahren nach Anspruch 6 oder 7, wobei das Bestimmen der Abkürzung für jedes Zeitintervall, die der kürzesten Fahrtzeit für den Fahrtweg entspricht, Folgendes enthält:

Approximieren der Vielzahl von Abkürzungen; und Zusammenführen von zwei approximierten Abkürzungen der approximierten Vielzahl von Abkürzungen.

10. Verfahren nach einem der Ansprüche 1 bis 9, das Folgendes umfasst:
das Approximieren der Fahrwegfunktionen einer Kante durch die untere Grenzen betreffende Funktion und die obere Grenzen betreffende Funktion bei einem Approximationsschritt.

11. Verfahren nach einem der Ansprüche 1 bis 10, das Folgendes umfasst:
das Nutzen eines Douglas-Peucker-Algorithmus zum Approximieren der Fahrwegfunktion einer Kante.

12. Verfahren nach einem der Ansprüche 1 bis 11, das Folgendes umfasst:
bei der individuellen Anpassung Sortieren unterer Dreiecke einer Abkürzung durch eine aufsteigende Summe der eine untere Grenze betreffenden Funktionen von Kanten, die Endknoten der Abkürzung mit einem mittleren Knoten verbinden, Verarbeiten der Dreiecke zunächst mit unteren Summen und Überspringen der meisten höheren Summen.

13. Verfahren nach einem der Ansprüche 1 bis 12, das Folgendes umfasst:

Aktualisieren einer Rangzuordnung eines Knotens, wenn entweder ein Potential des Knotens oder eine frühestes Ankunftszeit an dem Knoten verbesert wird; und
beim Verlängern einer Abkürzung Ableiten eines Potentials für einen mittleren Knoten.

14. Maschinenlesbares Medium, das Anweisungen umfasst, die von einem oder mehreren Prozessoren ausführbar sind, um das Verfahren nach einem der Ansprüche 1 bis 13 zu implementieren.

15. System zur zeitabhängigen Fahrzeugroutenplanung, das Folgendes umfasst:

einen oder mehrere Prozessoren; und

einen Speicher, der mit dem einen oder den mehreren Prozessoren gekoppelt ist und Anweisungen umfasst, die von einem oder mehreren Prozessoren ausführbar sind, um das Verfahren nach einem der Ansprüche 1 bis 13 zu implementieren.

**Revendications**

1. Procédé (100) de routage de véhicules dépendant du temps dans un réseau routier, modélisé sous la forme d'un graphe orienté avec des noeuds, lesquels représentent des intersections, et des arcs, lesquels représentent des segments de route, le procédé étant un procédé de hiérarchies de contraction personnalisables et où le routage de véhicules dépendant du temps implique :
de déterminer un chemin de trajet entre un premier noeud et un deuxième noeud, le procédé comprenant les étapes suivantes :

   pondérer chaque arc avec une fonction de temps de trajet qui établit une correspondance entre le temps de départ et le temps de trajet ;
   contracter tous les noeuds en insérant des arcs de raccourci entre les voisins d'un noeud si le chemin le plus court entre les voisins passe par le noeud de sorte que le chemin de trajet soit représenté par un raccourci entre le premier noeud et le deuxième noeud ;
   où chaque raccourci a une limite inférieure de la fonction de temps de trajet, une limite supérieure de la fonction de temps de trajet et un ensemble d'expansions dépendant du temps ;
   le procédé comprenant en outre les étapes suivantes :

      décompresser (120) le raccourci pour obtenir des temps de sous-trajets individuels dépendant du temps pour chaque sous-segment d'une pluralité de sous-segments du chemin de trajet associé au raccourci en utilisant la limite inférieure, la limite supérieure et
      l'ensemble des expansions dépendant du temps du raccourci; et
      déterminer (130) un temps de trajet pour le chemin de trajet sur la base des temps de sous-trajets dépendant du temps.

2. Procédé selon la revendication 1, dans lequel le raccourci entre le premier noeud et le deuxième noeud correspond au temps de trajet le plus court entre le premier noeud et le deuxième noeud pour un temps donné.

3. Procédé selon la revendication 1 ou la revendication 2, dans lequel le raccourci entre le premier noeud et le deuxième noeud contourne exactement un autre noeud du chemin de trajet.

4. Procédé selon l'une quelconque des revendications 1 à 3, comprenant en outre l'étape suivante :
faire circuler un véhicule en fonction du chemin de trajet sélectionné.

5. Procédé selon l'une quelconque des revendications 1 à 4, comprenant en outre l'étape suivante :
fournir un tableau comprenant deux intervalles de temps, ou plus, pour l'arrivée à un noeud, et des étiquettes, chaque intervalle de temps des deux intervalles de temps, ou plus, étant associé à au moins un raccourci respectif.

6. Procédé selon la revendication 5, dans lequel la fourniture de la table comprend les étapes suivantes :

   déterminer un raccourci pour chaque intervalle de temps correspondant au temps de trajet le plus court pour le chemin de trajet ; et
   allouer le raccourci déterminé à l'intervalle de temps.

7. Procédé selon la revendication 6, dans lequel la détermination du raccourci pour chaque intervalle de temps correspondant au temps de trajet le plus court pour le chemin de trajet comprend l'étape suivante :
calculer un poids pour chacun d'une pluralité de raccourcis entre le premier et le deuxième noeud.

8. Procédé selon l'une quelconque des revendications 5 à 7, dans lequel chaque intervalle de temps est associé à des informations de décompression, les informations de décompression permettant de décompresser le raccourci pour obtenir les sous-temps de trajets individuels dépendant du temps.

9. Procédé selon la revendication 6 ou la revendication 7, dans lequel la détermination du raccourci pour chaque intervalle de temps correspondant au temps de trajet le plus court pour le chemin de trajet comprend les étapes suivantes :

approximer la pluralité de raccourcis ; et
fusionner deux raccourcis approximés de la pluralité approximée de raccourcis.

10. Procédé selon l'une quelconque des revendications 1 à 9, comprenant l'étape suivante :
dans une étape d'approximation, approximer les fonctions de temps de trajet d'un arc par la fonction de limite inférieure et la fonction de limite supérieure.

11. Procédé selon l'une quelconque des revendications 1 à 10, comprenant l'étape suivante :
utiliser un algorithme de Douglas et Peucker pour approximer la fonction de temps de trajet d'un arc.

12. Procédé selon l'une quelconque des revendications 1 à 11, comprenant l'étape suivante :
dans la personnalisation, trier les triangles inférieurs d'un raccourci par la somme croissante des fonctions de limite inférieure des arcs reliant les noeuds d'extrémité du raccourci à un noeud central, traiter tout d'abord les triangles avec les sommes les plus faibles et sauter les sommes les plus élevées.

13. Procédé selon l'une quelconque des revendications 1 à 12, comprenant les étapes suivantes :

mettre à jour le classement d'un noeud lorsque soit le potentiel du noeud, soit l'heure d'arrivée au noeud la plus proche sont améliorés ; et
lors de l'expansion d'un raccourci, déduire un potentiel pour un noeud intermédiaire.

14. Support lisible par machine comprenant des instructions exécutables par un ou plusieurs processeurs pour mettre en oeuvre le procédé selon l'une quelconque des revendications 1 à 13.

15. Système de routage de véhicules dépendant du temps, comprenant

un ou plusieurs processeurs ; et
une mémoire couplée à un ou plusieurs processeurs et comprenant des instructions exécutables par les un ou plusieurs processeurs pour mettre en oeuvre le procédé selon l'une quelconque des revendications 1 à 13.

100

| selecting an index based on a current time, wherein the index is associated with a time interval and a travel path between a first node and a second node, wherein the travel path is represented by a shortcut between the first node and the second node while bypassing at least one further node of the travel path | 110 |

| unpacking the shortcut to obtain individual time-dependent sub travel times for each sub-segment of a plurality of sub-segments of the travel path associated with the shortcut | 120 |

| determining a travel time for the travel path based on the time-dependent sub travel times | 130 |

Fig. 1

Fig. 2

Fig. 3

Fig. 4

Fig. 5

---

**Algorithm 1:** UNPACK

---

**Input:** Shortcut $s = (u, v)$ with unpacking data $X_s$,
Time $\tau$

**Output:** Unpacked path $[u, ..., v]$

$x_\tau \leftarrow x \in X_s$ such that $\tau \in \Pi_x$ // `binary search`

**if** $x_\tau$ *represents original arc* $(u, v) \in A$ **then**
  | **return** $[u, v]$
**else**
  | $p \leftarrow$ UNPACK$((u, w_x), \tau)$
  | **return** $p \cup$ UNPACK$((w_x, v), \tau + $ EVAL$(p, \tau))$

---

Fig. 6

---

**Algorithm 2:** UNPACKPROFILE

---

**Input:** Shortcut $s = (u, v)$ with unpacking data $X_s$,
Time interval $[\tau, \pi]$

**Output:** Exact profile $f_s|_{[\tau, \pi]}$

Initialize $f_s$ as function with empty domain
**for** $x \in X_s$ **do**
  | $[\tau_x, \pi_x] \leftarrow [\tau, \pi] \cap \Pi_x$
  | **if** $x$ *represents original arc* $(u, v) \in A$ **then**
  |   | $f_x \leftarrow f_{(u,v)}|_{[\tau_x, \pi_x]}$
  | **else**
  |   | $f_{(u, w_x)} \leftarrow$ UNPACKPROFILE$((u, w_x), [\tau_x, \pi_x])$
  |   | $f_{(w_x, v)} \leftarrow$ UNPACKPROFILE$((w_x, v),$
  |   | $[\tau_x + f_{(u, w_x)}(\tau_x), \pi_x + f_{(u, w_x)}(\pi_x)])$
  |   | $f_x \leftarrow$ LINK$(f_{(u, w_x)}, f_{(w_x, v)})$
  | $f_s \leftarrow$ UNION$(f_s, f_x)$
**return** $f_s$

---

Fig. 7

---

**Algorithm 3:** SHORTCUTUNPACKRELAX

---

**Input:** Shortcut $s = (u, v)$ with unpacking data $T_s$, Time $\tau$

**Data:** Priority queue Q, Tentative earliest arrivals ea, Upward shortcuts in corridor $C^\wedge$

$x_\tau \leftarrow x \in X_s$ such that $\tau \in \Pi_x$ // `binary search`

**if** $x_\tau$ *represents original arc* $(u, v) \in A$ **then**
    $\sigma \leftarrow \tau + \text{EVAL}((u, v), \tau)$
    **if** $\sigma < \text{ea}(v)$ **then**
        $\text{ea}(v) \leftarrow \sigma$
        $\text{Q.INSERTORDECREASEKEY}(v, \text{ea}(v))$
**else**
    $C^\wedge \leftarrow C^\wedge \cup (w_{x_\tau}, v)$
    $\text{SHORTCUTUNPACKRELAX}((u, w_{x_\tau}), \tau)$

---

## Fig. 8

---

**Algorithm 4:** A*EXTENDEDSHORTCUTUNPACKRELAX

---

**Input:** Shortcut $s = (u, v)$ with unpacking data $T_s$, Time $\tau$

**Data:** Priority queue Q, Tentative earliest arrivals ea, Upward shortcuts in corridor $C^\wedge$

$x_\tau \leftarrow x \in X_s$ such that $\tau \in \Pi_x$ // `binary search`

**if** $x_\tau$ *represents original arc* $(u, v) \in A$ **then**
    $\sigma \leftarrow \tau + \text{EVAL}((u, v), \tau)$
    **if** $\sigma < \text{ea}(v)$ **then**
        $\text{ea}(v) \leftarrow \sigma$
    **if** $\text{ea}(v) + \text{p}(v)$ *improved* **then**
        $\text{Q.INSERTORDECREASEKEY}(v, \text{ea}(v) + \text{p}(v))$
**else**
    $\text{p}(w_{x_\tau}) \leftarrow \min(\text{p}(w_{x_\tau}), \text{p}(v) + \underline{b}_{(w_{x_\tau}, v)})$
    $C^\wedge \leftarrow C^\wedge \cup (w_{x_\tau}, v)$
    $\text{SHORTCUTUNPACKRELAX}((u, w_{x_\tau}), \tau)$

---

## Fig. 9

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description

- **TIM ZEITZ.** *Algorithmen fur Routenplanung,* 01 July 2019, https://i11.www.iti.kit.edu/_media/teaching/sommer2019/ routenplanung/chap2-timedependent-preprocessing.pdf
- Minimum time-dependent travel times with contraction hierarchies. **VEIT BATZ G et al.** ACM JOURNAL OF EXPERIMENTAL ALGORITHMICS. ASSOCIATION OF COMPUTING MACHINERY, 19 April 2013, vol. 18, 1.1-1.43
- Customizable Contraction Hierarchies. **JULIAN DIBBELT et al.** 2th European Conference on Computer Vision, ECCV 2012. Springer, 24 August 2015